Europäisches Patentamt

European Patent Office

Office européen des brevets

(11) Veröffentlichungsnummer: **0 035 785**
**B1**

(12) EUROPÄISCHE PATENTSCHRIFT

(45) Veröffentlichungstag der Patentschrift:
28.03.84

(51) Int. Cl.³: **C 08 F 214/06** // (C08F214/06, 218/08, 220/04, 218/14)

(21) Anmeldenummer: 81101707.8

(22) Anmeldetag: 09.03.81

(54) Carboxylgruppenmodifiziertes Vinylchlorid-Emulsionspolymerisat, Verfahren zu seiner Herstellung und seine Verwendung.

(30) Priorität: 10.03.80 DE 3009148

(43) Veröffentlichungstag der Anmeldung:
16.09.81 Patentblatt 81/37

(45) Bekanntmachung des Hinweises auf die Patenterteilung:
28.03.84 Patentblatt 84/13

(84) Benannte Vertragsstaaten:
AT BE CH DE FR GB IT LI NL SE

(56) Entgegenhaltungen:
CH - A - 316 163
DE - A - 1 770 901
FR - A - 1 306 786
FR - A - 2 262 675

(73) Patentinhaber: WACKER-CHEMIE GMBH,
Prinzregentenstrasse 22, D-8000 München 22 (DE)

(72) Erfinder: Puhe, Rudolf, Dr., Fleming-Strasse 8,
D-8263 Burghausen (DE)
Erfinder: Frey, Werner, Dr., Marktler-Strasse 82,
D-8263 Burghausen (DE)
Erfinder: Weinhold, Günter, Dr.,
Hans-Stiglocher-Strasse 3, D-8263 Burghausen (DE)

Carboxylgruppenmodifiziertes Vinylchlorid-Emulsionspolymerisat,
Verfahren zu seiner Herstellung und seine Verwendung

Gegenstand der Anmeldung ist ein verpastbares Emulsionspolymerisat auf Basis carboxylgruppenmodifizierten Vinylchlorid-Vinylacetat-Terpolymerisats mit verbesserter Haftfestigkeit, das durch Copolymerisation von

60 - 98 Gew.-%, vorzugsweise 78 - 97 Gew.-%, Vinylchlorid (VC),

1 - 29 Gew.-%, vorzugsweise 1 - 20 Gew.-%, Vinylacetat (VAC) und

1 - 15 Gew.-%, vorzugsweise 2 -10 Gew.-%, carboxylgruppenhaltiger Monomeren
hergestellt wird.

Erfindungsgemäss wird als carboxylgruppenhaltiges Monomeres Acrylsäure verwendet, die Monoallyl- oder Monovinylester von nicht äthylenisch ungesättigten Dicarbonsäuren in einer solchen Menge enthalten kann, dass bis zu maximal 20 Gew.-% davon, bezogen auf Acrylsäure, im Terpolymerisat vorliegen.

Das erfindungsgemässe Emulsionspolymerisat kann vorzugsweise in an sich bekannter Weise zu Plastisolen bzw. Vinylchlorid-Pasten, Dispersionen von pulverförmigem verpastbarem PVC oder Vinylchlorid-Copolymeren in geeigneten Weichmachern verarbeitet werden.

Aus DE-B-1 645 672 und DE-B-1 745 561 sind beispielsweise verpastbare VC-VAC-Maleinanhydrid-Terpolymerisate bekannt. Gegenüber diesen dort beschriebenen Terpolymerisaten, die bereits in Pastenform auf Gewebe aufgetragen wurden, besitzen die erfindungsgemässen Terpolymerisate überraschenderweise auch bei geringerem Carboxylgruppengehalt eine verbesserte Haftfestigkeit, wenn sie als Paste zur Beschichtung von flexiblen flächigen Gebilden, insbesondere aus Kunst- oder Naturstoffen, wie z.B. vorzugsweise Folien, gewebten oder ungewebten Faserprodukten, wie Textilien, Vliesen, Papier und Pappe, verwendet werden. Ausserdem lassen sich die erfindungsgemässen Terpolymerisate in wesentlich kürzerer Zeit mit besseren Ausbeuten herstellen als die vorbekannten Terpolymerisate.

Aus CH-A-316-163 und 273 079 sowie aus der BE-A-609 934 sind Terpolymere aus Vinylchlorid, Vinylacetat und einem weiteren carboxylgruppenhaltigen Comonomeren bekannt, die eine verbesserte Haftung auf Metall aufweisen. Diese Polymeren sind jedoch aufgrund ihres molekularen Aufbaus und ihrer äusseren Form — bedingt durch den Herstellungsprozess in Suspension, in Lösung oder in Emulsion mit nachfolgender Ausfällung durch Koagulation — nur als Lösungen in organischen Lösungsmitteln, wie Ketonen, Estern von Carbonsäuren und ähnlichem, verarbeitbar. Ihre Anwendung liegt dementsprechend hauptsächlich im Lacksektor. Beschichtungen von flexiblen Flächengebilden mit derartigen Lacklösungen sind technisch aufwendig und befriedigen vielfach nicht. Oft verbietet sich der Einsatz solcher Lösungen wegen der Empfindlichkeit des zu beschichtenden Trägers gegenüber dem Lösungsmittel. In jedem Falle aber stellen die Lösungsmitteldämpfe den Anwender vor vielfach kaum oder nur unter grossem Aufwand lösbare Probleme bezüglich des Umweltschutzes und der Arbeitsplatzhygiene. Zudem verteuern schon die unvermeidlichen Verluste an Lösungsmittel durch Verdampfung die Anwendung solcher Lacke nicht unerheblich. Eine gewünschte Modifizierung der Beschichtung, z.B. durch Weichmacher oder ähnliche Zusätze, stellt den Anwender vor weitere erhebliche Schwierigkeiten.

Diese Probleme lassen sich durch die erfindungsgemässe Paste, die unter Verwendung der obengenannten erfindungsgemässen carboxylgruppenmodifizierten Vinylchlorid-Vinylacetat-Terpolymeren hergestellt wird, in überraschend einfacher Weise umgehen. Überraschenderweise weisen diese Polymeren eine deutlich bessere Haftfestigkeit auf flexiblen Flächengebilden, insbesondere auf Geweben, Vliesen, Pappe, Papier und auch auf Folien, sowie auf Glas und Metall, auf als die bekannten modifizierten Polymeren und mindestens die gleiche Haftfestigkeit wie Kombinationen aus herkömmlicher PVC-Paste und einem Haftvermittlersystem. Solche Haftvermittlersysteme sind wegen meist geringer Topfzeit und grosser Empfindlichkeit gegen Umwelteinflüsse bei der Verarbeitung, z.B. Zutritt von Luft und Feuchtigkeit, im allgemeinen unerwünscht. Als Beispiel für ein solches Haftvermittlersystem sei hier die Kombination aus verzweigten Polyestern und Diisocyanaten genannt.

Die Erreichung der unter Mitverwendung solcher Haftvermittlersysteme, die ausserdem noch durch den erheblich höheren Arbeits- und Investitionsaufwand den Beschichtungsvorgang sehr stark verteuern, zu erzielenden Haftwerte ohne diesen Aufwand stellt somit einen erheblichen technischen Fortschritt dar.

Besonders gute Ergebnisse werden erreicht auf flexiblen Flächengebilden, wie Geweben oder Vliesen aus Natur- und/oder aus Kunstfasern, wie Polyestern, Polyamiden, Polypropylen usw.

Die aus den erfindungsgemässen, leicht anpastbaren carboxylgruppenmodifizierten Vinylchlorid-Vinylacetat-Terpolymerisaten hergestellten Pasten zeigen ähnlich gute, zum Teil sogar bessere Eigenschaften und Verarbeitbarkeit als die üblichen Pasten. So sind Pasten der erfindungsgemässen Zusammensetzung im Gegensatz zu Kombinationen aus PVC-Paste und Haftvermittler in hohem Masse lagerstabil und zeigen ausserdem pseudoplastisches Fliessverhalten, so dass nach dem Aufbringen auf das Substrat kein Abtropfen oder Abfliessen mehr auftritt.

Zur Erreichung der angegebenen Vorteile ist weitgehende Einheitlichkeit der Polymeren erforderlich. Entsprechend wird das erfindungsgemässe Terpolymerisat hergestellt durch Mischpolymerisation von 60 - 98 Gew.-%, vorzugsweise 78 - 97 Gew.-%, insbesondere 83 - 97 Gew.-% Vinylchlorid, 1 - 29 Gew.-%, vorzugsweise 1 - 20 Gew.-%, insbesondere 1 - 15 Gew.-% Vinylacetat und 1 - 15 Gew.-%, vorzugsweise 2 - 10 Gew.-%, insbesondere 2 - 8 Gew.-% carboxylgruppenhaltiger Monomeren in wässriger Emulsion mittels freie Radikale liefernder, vorzugsweise wasserlöslicher Katalysatoren, in üblichen Mengen von vorzugsweise 0,001 bis 1 Gew.-%, bezogen auf Monomere, in Gegenwart von bis zu 6 Gew.-%, vorzugsweise 0,1 - 2 Gew.-%, bezogen auf Monomere, an Emulgatoren sowie gegebenenfalls Schutzkolloiden und weiteren üblichen Zusatzstoffen, die gegebenenfalls in den üblichen Mengen zugesetzt werden können.

Die Monomeren Vinylchlorid und Vinylacetat können genau wie die übrigen Polymerisationszusätze vorgelegt, teilweise oder ganz im Laufe der Polymerisation zudosiert werden. Da es besonders wichtig ist, dass die carboxylhaltigen Monomereinheiten, vorzugsweise Acrylsäure allein, gleichmässig einpolymerisiert werden, wird dieses carboxylgruppenhaltige Monomere vorzugsweise im Masse seines Verbrauches zudosiert. Wird es zu schnell zugegeben, so kann die Emulsionsstabilität entscheidend beeinträchtigt werden. Der Einbau beeinflusst nicht nur die Haftwerte, sondern auch die Verpastbarkeit und das Pastenfliessverhalten.

Die erfindungsgemäss eingesetzte Acrylsäure kann auch teilweise durch Monoallyl- oder Monovinylester von nicht äthylenisch ungesättigten Dicarbonsäuren ersetzt werden, wobei die Menge so bemessen ist, dass ein Terpolymeres aus Vinylchlorid, Vinylacetat und Acrylsäure hergestellt werden kann, in dem letztere zu maximal 20 Gew.-%, bezogen auf Acrylsäure, durch die genannten anderen Monomeren ersetzt ist.

Mittels der Menge der einpolymerisierten carboxylgruppenhaltigen Monomeren (innerhalb des angegebenen Bereiches) lassen sich die gewünschte Haftfestigkeit und die gewünschte Pastenviskosität gut steuern. So erhöhen sich beide Parameter mit zunehmendem Carboxylgruppengehalt.

Die Polymerisate lassen sich besonders gut zur erfindungsgemässen Paste verarbeiten bzw. zur Beschichtung verwenden, wenn sie K-Werte nach Fikentscher von 60 - 80, insbesondere von 65 - 75, aufweisen. Sie besitzen im allgemeinen eine Zusammensetzung, die weitgehend der der Monomerphase entspricht, z.B. etwa 60 - 98 Gew.-% Vinylchlorid, 1 - 29 Gew.-% Vinylacetat und 1 - 15 Gew.-% carboxylhaltige Monomereinheiten.

Die Polymerisate sind bei überraschend niedrigen Temperaturen gut und gleichmässig gelierbar und zeigen bereits nach Gelierung bei diesen niedrigen Temperaturen, z.B. etwa 130-140°C, eine sehr gute Haftung auf dem Trägermaterial. Die niedrigen Geliertemperaturen sind besonders für Träger aus Kunststoffmaterial, das z.B. auch geschäumt sein kann, wichtig, da hierdurch eine thermische Schädigung des Substrats vermieden werden kann.

Das erfindungsgemässe Polymerisationsverfahren kann diskontinuierlich oder kontinuierlich, mit oder ohne Verwendung von Samenlatex durchgeführt werden. Gegebenenfalls werden 1 - 10 Gew.-%, bezogen auf Monomere, Polyvinylchlorid (PVC) als Samenlatex zugegeben.

Mögliche Katalysatoren sind die bei der Emulsionspolymerisation üblicherweise eingesetzten, vorzugsweise wasserlöslichen peroxydischen Verbindungen, z.B. Natrium-, Kalium- und Ammoniumperoxodisulfat und Wasserstoffperoxyd. Bevorzugt werden diese Verbindungen in Kombination mit reduzierenden Substanzen und gegebenenfalls Metallsalzen, meist von Schwermetallen, wie Kupfer, als zusätzlichen Aktivatoren verwendet. Als reduzierende Komponente solcher üblicherweise als Redox-Katalysatoren bezeichneten Systeme werden z.B. wasserlösliche Salze, wie Bisulfite, Thiosulfate, Nitrite, Sulfoxylate, letztere insbesondere als Formaldehydaddukte, weiterhin organische Säuren, wie Ascorbinsäure, sowie Hydrazin und Hydroxylamin eingesetzt.

Als Emulgatoren können alle üblicherweise in der Emulsionspolymerisation eingesetzten Verbindungen verwendet werden. Bevorzugt werden anionische Emulgatoren, wie Alkylsulfonate, Alkylarylsulfonate, Alkylsulfate und Alkyläthersulfate, Fettseifen, Sulfobernsteinsäureester oder -amide oder Kombinationen dieser Verbindungen, gegebenenfalls zusammen mit den üblichen Schutzkolloiden, die in üblichen Mengen eingesetzt werden, oder auch mit nichtionischen Emulgatoren, eingesetzt. Wegen der besseren Haftungswerte des Polymerisats werden die Dispergierhilfsstoffe vorzugsweise in möglichst geringen Mengen eingesetzt, insbesondere etwa bis 1 Gew.-%, bezogen auf Monomere.

Die Polymerisation wird üblicherweise im pH-Bereich der eingesetzten carboxylgruppenhaltigen Monomeren durchgeführt, z.B. etwa bei pH 2 - 7, insbesondere 3 - 6. Auch ein Zusatz von üblichen Puffersubstanzen, z.B. von Phosphaten, Carbonaten, Acetaten, Boraten usw. oder deren Gemischen ist möglich, wobei unter den Salzen mehrbasiger Säuren auch Hydrogensalze verstanden werden, z.B. Natriumdihydrogenphosphat, Dikaliumhydrogenphosphat Kaliumhydrogencarbonat usw.

Die Polymerisatdispersion, die im allgemeinen in Form von Latex anfällt, wird durch Sprüh- oder durch Walzentrocknung, vorzugsweise durch Sprühtrocknung, gegebenenfalls mit anschliessender Mahlung des Polymeren aufgearbeitet.

Die erfindungsgemässen Polymerisate lassen sich besonders vorteilhaft zu pseudoplastischen Pasten verarbeiten, die ihrerseits besonders bevorzugt zur Beschichtung von flexiblen, flächigen Gebilden, wie z.B. Geweben oder Vliesen aus Natur- und/oder Kunstfasern, Papier, Pappe und Folien, verwendet werden.

Die Pasten werden in an sich bekannter Weise hergestellt, vorzugsweise aus 100 Gewichtsteilen des erfindungsgemässen Terpolymeren oder von Gemischen solcher Terpolymeren, 10 - 100 Gewichtsteilen Weichmacher aus der Gruppe der hochsiedenden Ester von Carbonsäuren oder Phosphorsäure, z.B. der Vollester der Sebacin-, der Terephthal-, der Phthal-, der Azelain- und der Phosphorsäure mit langkettigen Alkoholen, insbesondere solchen mit 6 - 18 C-Atomen, oder auch mit gegebenenfalls alkylsubstituierten Phenolen, bis etwa 10 Gewichtsteilen handelsüblicher Wärmestabilisatoren, z.B. von Schwermetallsalzen, wie etwa handelsüblichen Blei-Cadmium-Stabilisatoren, und bis etwa 10 Gewichtsteilen weiterer üblicher Zusätze, z.B. Farbstoffe, Pigmente, Füllstoffe, UV-Absorber und dergleichen.

Die folgenden Beispiele für Produkte, die unter Verwendung der erfindungsgemässen Pasten (z.B.

mittels Streichen, Aufsprühen oder Tauchen) hergestellt werden können, zeigen die überraschend breite Anwendbarkeit des Gegenstands der Anmeldung: Kunstleder, Planen, Tischdecken, Fussbodenbeläge, Wandbeläge usw. Besonders vorteilhaft wird die Be-schichtung auf kontinuierlich arbeitenden Streichan-lagen durchgeführt. Die Beschichtung des Substrats kann direkt oder indirekt, mittels eines Hilfsträgers, erfolgen.

Die folgenden Beispiele und Vergleichsversuche dienen der weiteren Erläuterung der Erfindung.

*Vergleichsversuch A*

In einem 400-l-Reaktionsgefäss wurden vorge-legt:
130 kg deionisiertes Wasser,
100 kg Vinylchlorid,
3,3 kg PVC-Keimlatex mit 0,2 $\mu$m Teilchengrös-se und einem Feststoffgehalt von 40 Gew.-%, bezo-gen auf die zugesetzte Keimlatexdispersion,
2 kg 15-gewichtsprozentige wässrige Ammo-niumlauratlösung,
50 g Kaliumpersulfat.

Es wurde auf 54°C aufgeheizt und mit einer Rührdrehzahl von 75 U min⁻¹ bis zum beginnenden Druckabfall polymerisiert, wobei während 8 Stunden kontinuierlich 8 kg der 15-gewichtsprozentigen Am-moniumlauratlösung nachdosiert wurden. Die erhal-tene Emulsion hatte einen Feststoffgehalt von 37 Gew.-%. Nach Sprühtrocknen der Emulsion (Versprühen über eine 2-Stoffdüse, System Nubilosa) erhielt man ein verpastbares Produkt mit K-Wert 68,4 (0,5 g/100 cm³ in Cyclohexanon bei 25°C).

Eine Paste aus 3 Teilen PVC und 2 Teilen Dioctylphthalat weist nach 2 Stunden eine Viskosität von 5200 mPas bei einem Schergefälle von 4 sec⁻¹ auf (Brookfield-Viskosimeter, 20 min⁻¹, 25°C).

Die mit diesem Pastenprodukt auf Polyester- und Polyamidfolien erzielten Haftwerte sind in Tabelle 1 zusammengestellt.

*Vergleichsversuch B*

In einem 400-l-Reaktionsgefäss wurden vorge-legt:
130 kg deionisiertes Wasser,
95 kg Vinylchlorid,
5,5 kg Vinylacetat,
1,5 kg 10%ige wässrige Lösung von Sulfobern-steinsäuredihexylester (Aerosol ® MA der Fa. Cyan-amid),
50 g Kaliumpersulfat.

Nach Aufheizen auf 54°C wurde bei einer Rührerdrehzahl von 75 U min⁻¹ ca. 9 Stunden bei konstanter Temperatur bis zum beginnenden Druckabfall polymerisiert. Dabei wurden während 8 Stunden weitere 8,5 kg Sulfobernsteinsäurehexylester (10-gewichtsprozentige wässrige Lösung) nachdosiert. Die erhaltene Emulsion hatte einen Feststoffgehalt von 37,2 Gew.-%. Das Polymerisat besass einen K-Wert von 68,2. Die Aufarbeitung erfolgte wie im Vergleichsversuch A.

Die Pastenviskosität wurde analog Vergleichsversuch A mit 21.000 mPas gemessen. Die Haftungswerte sind in Tabelle 1 aufgeführt.

*Beispiel 1*

In einem 400-l-Reaktionsgefäss wurden vorge-legt:
130 kg deionisiertes Wasser,
95 kg Vinylchlorid,
5,5 kg Vinylacetat,
1,5 kg Sulfobernsteinsäuredihexylester (10-gewichtsprozentige wässrige Lö-sung),
70 g Ammoniumacetat,
50 g Kaliumpersulfat.

Nach Aufheizen auf 54°C wurde bei einer Rührerdrehzahl von 75 U min⁻¹ ca. 9 Stunden bei konstanter Temperatur bis zum beginnenden Druckabfall polymerisiert. Während der ersten 8 Stunden wurden 3 kg Acrylsäure und 8,5 kg Sulfobernsteinsäuredihexylester (10-gewichtsprozentige wässrige Lösung) kontinuierlich zudosiert. Der Feststoffgehalt der erhaltenen Emulsion betrug 37,5 Gew.-%. Die Aufarbeitung erfolgte analog Vergleichsversuch A. Der K-Wert betrug 67,9 und die Pastenviskosität (bestimmt analog Vergleichsversuch A) 17.000 mPas. Haftungswerte sind wiederum in Tabelle 1 aufgeführt.

*Beispiel 2*

Beispiel 1 wurde wiederholt mit der Abänderung, dass anstelle der 10-gewichtsprozentigen wässrigen Sulfobernsteinsäuredihexylesterlösung eine 10-gewichtsprozentige wässrige Lösung von Laurylsul-fat (Texapon ® K12) eingesetzt wurde.

Der K-Wert des Polymerisats betrug 67,7, die Pastenviskosität 19.000 mPas.

*Vergleichsversuch C*

Beispiel 1 wurde wiederholt mit der Abänderung, dass statt der Acrylsäure 3 kg Maleinsäure dosiert wurden. Nach 23 Stunden wurde ein Umsatz von 65% erreicht. Der K-Wert des Polymerisats betrug 68,2, die Pastenviskosität 17.000 mPas. Die Haftwerte sind wiederum in Tabelle 1 aufgeführt.

Überprüfung der Hafteigenschaften:

Zur Messung der Hafteigenschaften wurde das Produkt als PVC-Paste in einem 35 mm breiten Streifen von 1 mm Stärke auf Polyesterfolien (Hostaphan ® RN 190, Fa. Hoechst AG, Frankfurt/Main) bzw. Polyamidfolien (Supronyl ® N 200, Fa. Kalle, Wiesbaden) aufgetragen und 5 Minuten bei 145°C ge-liert.

Pastenzusammensetzung:
100 Gewichtsteile Polymerisat
65 Gewichtsteile Dioctylphthalat
2 Gewichtsteile Stabilisator Nuostab ® V 1277 (Ba-Cd-flüssig), Fa. Siegle, Augsburg

Die Haftwerte der gelierten Pasten auf Polyester- und Polyamidfolie wurden durch die zum Abziehen der Streifen von der Folie benötigte Schälkraft ausgedrückt. Dabei wurde die durchschnittliche Schälkraft aus dem Integralwert der Schälkraft über die Länge des abzuziehenden Streifens ermittelt (Schälwinkel 180°C). Tabelle 1 gibt die Mittelwerte von jeweils 3 Messungen an.

*Tabelle 1*

Haftung von ausgelierten Beschichtungen aus Pasten, die aus entsprechend den Beispielen und Vergleichsversuchen hergestellten Polymerisaten bereitet wurden (Schälkraft in N)

| Beispiele und Vergleichsversuche | Polyesterfolie | Polyamidfolie |
|---|---|---|
| A | 1,3 | 0,4 |
| B | 1,4 | 0,7 |
| B * | 4,0 | 0,9 |
| 1 | 4,6 | 5,0 |
| 2 | 4,8 | 7,0 |
| C | 3,4 | 2,6 |

* Unter Zusatz eines handelsüblichen Haftvermittlers auf Polyester/Diisocyanat-Basis: 4 Gewichtsteile Haftvermittler TN, 3 Gewichtsteile Desmodur ® N 75
(Dieser Zusatz wurde in die vorstehend angegebene Pastenzusammensetzung eingearbeitet.)

**Patentansprüche für die Vertragsstaaten:**
BE, CH, DE, FR, GB, IT, LI, NL, SE

1. Verpastbares Emulsionspolymerisat auf Basis eines carboxylgruppenmodifizierten Vinylchlorid-Vinylacetat-Terpolymerisats mit verbesserter Haftfestigkeit, hergestellt durch Copolymerisation von
60 - 98 Gew.-% Vinylchlorid,
1 - 29 Gew.-% Vinylacetat und
1 - 15 Gew.% Acrylsäure, von der im Terpolymerisat bis zu 20 Gew.-% durch Monoallylester und/oder Monovinylester von nicht ethylenisch ungesättigten Dicarbonsäuren ersetzt sein können,
mit anschliessender Sprüh- oder Walzentrocknung.

2. Verpastbares Emulsionspolymerisat nach Anspruch 1, dadurch gekennzeichnet, dass neben Vinylchlorid und Vinylacetat als drittes Monomeres Acrylsäure allein verwendet wird.

3. Verfahren zur Herstellung des Emulsionspolymerisats nach Anspruch 1 durch Mischpolymerisation von Vinylchlorid, Vinylacetat und carboxylgruppenhaltigen Monomeren in wässriger Emulsion mittels freie Radikale liefernder Katalysatoren in Gegenwart von bis zu 6 Gew.-%, bezogen auf Monomere, an Emulgatoren und gegebenenfalls Schutzkolloiden und gegebenenfalls weiteren üblichen Zusatzstoffen, dadurch gekennzeichnet, dass
a) 60 - 98 Gew.-% Vinylchlorid,
b) 1 - 29 Gew.-% Vinylacetat und
c) 1 - 15 Gew.% Acrylsäure, die im Terpolymerisat zu maximal 20 Gew.-% durch Monoallylester und/oder Monovinylester von nicht ethylenisch ungesättigten Dicarbonsäuren ersetzt sein kann,
copolymerisiert werden, die Komponente c) während der Polymerisation zudosiert wird und die Polymerisatdispersion durch Sprüh- oder Walzentrocknung ggf. mit anschliessender Mahlung aufgearbeitet wird.

4. Verwendung des Emulsionspolymerisats gemäss Anspruch 1 oder 2 in Pastenform, nach Zusatz von Weichmacher, Wärmestabilisator und ggf. weiteren Zusätzen, zum Beschichten von flexiblen flächigen Gebilden.

**Patentansprüche für den Vertragsstaat: AT**

1 Verfahren zur Herstellung von verpastbarem Emulsionspolymerisat mit verbesserter Haftfestigkeit durch Mischpolymerisation von Vinylchlorid, Vinylacetat und carboxylgruppenhaltigen Monomeren in wässriger Emulsion mittels freie Radikale liefernder Katalysatoren in Gegenwart von bis zu 6 Gew.-%, bezogen auf Monomere, an Emulgatoren und gegebenenfalls Schutzkolloiden und gegebenenfalls weiteren üblichen Zusatzstoffen, dadurch gekennzeichnet, dass
a) 60 - 98 Gew.-% Vinylchlorid,
b) 1 - 29 Gew.-% Vinylacetat und
c) 1 - 15 Gew.% Acrylsäure, die im Terpolymerisat zu maximal 20 Gew.-% durch Monoallylester und/oder Monovinylester von nicht ethylenisch ungesättigten Dicarbonsäuren ersetzt sein kann,
copolymerisiert werden, die Komponente c) während der Polymerisation zudosiert wird und die Polymerisatdispersion durch Sprüh- oder Walzentrocknung ggf. mit anschliessender Mahlung aufgearbeitet wird.

2. Verfahren nach Anspruch 1, dadurch gekennzeichnet, dass neben Vinylchlorid und Vinylacetat als drittes Monomeres Acrylsäure allein verwendet wird.

3. Verwendung des gemäss Anspruch 1 oder 2 hergestellten Emulsionspolymerisates in Pastenform, nach Zusatz von Weichmacher, Wärmestabilisator und ggf. weiteren Zusätzen, zum Beschichten von flexiblen flächigen Gebilden.

**Claims for the Contracting States:**
BE, CH, DE, FR, GB, IT, LI, NL, SE

1. Pastable emulsion polymer based an a carboxyl group-modified vinyl chloride/vinyl acetate terpolymer having improved adhesion strength, which is manufactured by the copolymerisation of
from 60 to 98% by weight of vinyl chloride,
from 1 to 29% by weight of vinyl acetate and
from 1 to 15% by weight of acrylic acid,
up to 20% by weight of which can be replaced by monoallyl esters and/or monovinyl esters of non-ethylenically unsaturated dicarboxylic acids in the terpolymer
and spray dried or roll dried thereafter.

2. Pastable emulsion polymer according to claim 1, characterized in that, in addition to vinyl chloride and vinyl acetate, solely acrylic acid is used as the third monomer.

3. Process for the manufacture of the emulsion polymer according to claim 1 by the copolymerisation of vinyl chloride, vinyl acetate and carboxyl group-containing monomers in aqueous emulsion by means of free-radical-forming catalysts, in the presence of up to 6% by weight, based on the monomers, of emulsifiers and, optionally, protective colloids and, optionally, other conventional additives, characterized in that
a) from 60 to 98% by weight of vinyl chloride,
b) from 1 to 29% by weight of vinyl acetate and
c) from 1 to 15% by weight of acrylic acid,

up to 20% by weight of which can be replaced by monoallyl esters and/or monovinyl esters of non-ethylenically unsaturated dicarboxylic acids in the terpolymer

are copolymerised and component c) is metered in during polymerisation, and that the polymer dispersion is worked up by spray drying or roll drying, optionally with subsequent milling of the polymer.

4. Use of the emulsion polymer of claim 1 or 2 in form of a paste after the addition of plasticisers, heat stabilisers and optionally other additives, for coating flexible sheet-like articles.

**Claims for the Contracting State: AT**

1. Process for the manufacture of a pastable emulsion polymer having improved adhesion strength, by the copolymerisation of vinyl chloride, vinyl acetate and carboxyl group-containing monomers in aqueous emulsion by means of free-radical-forming catalysts, in the presence of up to 6% by weight, based on the monomers, of emulsifiers and, optionally, protective colloids and, optionally, other conventional additives, characterized in that
    a) from 60 to 98% by weight of vinyl chloride,
    b) from 1 to 29% by weight of vinyl acetate and
    c) from 1 to 15% by weight of acrylic acid,
up to 20% by weight of which can be replaced by monoallyl esters and/or monovinyl esters of non-ethylenically unsaturated dicarboxylic acids in the terpolymer

are copolymerised and component c) is metered in during polymerisation, and that the polymer dispersion is worked up by spray drying or roll drying, optionally with subsequent milling of the polymer.

2. Process according to claim 1, characterized in that in addition to vinyl chloride and vinyl acetate, solely acrylic acid is used as the third monomer.

3. Use of the emulsion polymer according to claim 1 or 2 in form of a paste after the addition of plasticisers, heat stabilisers and optionally other additives, for coating flexible sheet-like articles.

**Revendications pour les Etats Contractants:**
BE, CH, DE, FR, GB, IT, LI, NL, SE

1. Polymère en émulsion empâtable à base d'un terpolymère chlorure de vinyle/acétate de vinyle modifié par des groupes carboxyles, ayant une meilleure adhérence et caractérisé en ce qu'il a été préparé par copolymérisation de:
    60 à 98% en poids de chlorure de vinyle,
    1 à 29% en poids d'acétate de vinyle, et
    1 à 15% en poids d'acide acrylique dont jusqu'à 20% en poids peuvent être remplacés dans le terpolymère par de l'ester monoallylique et/ou de l'ester monovinylique d'acides dicarboxyliques ne présentant pas d'insaturation éthylénique,
avec séchage subséquent par automatisation ou sur des cylindres.

2. Polymère en émulsion empâtable selon la revendication 1, caractérisé en ce que, en plus du chlorure de vinyle et de l'acétate de vinyle, on utilise seulement de l'acide acrylique comme troisième monomère pour préparer ce polymère.

3. Procédé de préparation d'un polymère en émulsion selon la revendication 1, par copolymérisation de chlorure de vinyle, d'acétate de vinyle et d'un monomère contenant des groupes carboxyles en émulsion aqueuse à l'aide de catalyseurs fournissant des radicaux libres en présence d'une proportion, allant jusqu'à 6% en poids, par rapport aux monomères, d'émulsifiants et éventuellement de colloïdes protecteurs et éventuellement d'autres additifs usuels, procédé caractérisé en ce qu'on copolymérise:
    a) 60 à 98% en poids de chlorure de vinyle,
    b) 1 à 29% en poids d'acétate de vinyle, et
    c) 1 à 15% en poids d'acide acrylique dont jusqu'à un maximum de 20% en poids peuvent être remplacés dans le terpolymère par de l'ester monoallylique et/ou de l'ester monovinylique d'acides dicarboxyliques ne présentant pas d'insaturation éthylénique,
en ce qu'on introduit de façon dosée le constituant c) pendant la polymérisation et l'on traite la dispersion de polymère par séchage par atomisation ou séchage sur des cylindres avec éventuellement un broyage subséquent.

4. Utilisation du polymère en émulsion selon la revendication 1 ou 2, sous forme de pâtes, après addition de plastifiants, d'un stabilisant à l'égard de la chaleur et éventuellement d'autres additifs, pour l'enduction d'objets planiformes souples.

**Revendications pour l'Etat Contractant: AT**

1. Procédé de préparation d'un polymère en émulsion empâtable ayant une meilleure adhérence, par copolymérisation de chlorure de vinyle, d'acétate de vinyle et d'un monomère contenant des groupes carboxyles en émulsion aqueuse à l'aide de catalyseurs fournissant des radicaux libres en présence d'une proportion, allant jusqu'à 6% en poids, par rapport aux monomères, d'émulsifiants et éventuellement de colloïdes protecteurs et éventuellement d'autres additifs usuels, procédé caractérisé en ce qu'on copolymérise:
    a) 60 à 98% en poids de chlorure de vinyle,
    b) 1 à 29% en poids d'acétate de vinyle, et
    c) 1 à 15% en poids d'acide acrylique qui peut être remplacé par une proportion dont le maximum est de 20% en poids, dans le terpolymère par de l'ester monoallylique et/ou de l'ester monovinylique d'acides dicarboxyliques ne présentant pas d'insaturation éthylénique,
on ajoute de façon dosée le constituant c) pendant la polymérisation et l'on traite la dispersion de polymère par séchage par atomisation ou séchage sur des cylindres avec éventuellement un broyage subséquent.

2. Procédé selon la revendication 1, caractérisé en ce qu'on utilise, en plus du chlorure de vinyle et de l'acétate de vinyle, seulement de l'acide acrylique comme troisième monomère.

3. Utilisation du polymère, obtenu en émulsion selon la revendication 1 ou 2, sous forme de pâtes, après addition de plastifiants, d'un stabilisant à l'égard de la chaleur et éventuellement d'autres additifs, pour l'enduction d'objets planiformes souples.